# EUROPÄISCHE PATENTSCHRIFT

(11) **EP 1 867 426 B1**
(45) Veröffentlichungstag und Bekanntmachung des Hinweises auf die Patenterteilung: **25.11.2009**
(21) Anmeldenummer: 07011067.1
(22) Anmeldetag: 05.06.2007
(51) Int. Cl.: B23K 15/06

(54) **Kammeranordnung zur Verwendung bei der Elektronenstrahlbearbeitung**
Chamber assembly for application in electron beam machining
Agencement d'une chambre pour le traitement par faisceaux d'électrons

(30) Priorität: 16.06.2006 DE 102006027820
(43) Veröffentlichungstag der Anmeldung: 19.12.2007
(73) Patentinhaber: All Welding Technologies AG, 82216 Maisach (DE)
(72) Erfinder: Vokurka, Franz, 11800 Prag (CZ)
(74) Vertreter: Kramer, Reinhold

(56) Entgegenhaltungen:
- JP-A- 59 104 282
- US-A- 3 424 891

## Beschreibung

Die Erfindung betrifft eine Kammeranordnung zur Verwendung bei der Elektronenstrahlbearbeitung, insbesondere beim Elektronenstrahlschweißen von Werkstücken unter Vakuum, insbesondere eine Kleinkammermaschine, gemäß dem Oberbegriff des Anspruchs 1, siehe die DE- A- 3 134 018.

Eine Elektronenstrahlbearbeitung wie das Elektronenstrahlschweißen von Werkstücken unter Vakuum findet gewöhnlich in Kammern statt, in denen Haltewerkzeuge für die Werkstücke angeordnet sind. Die Haltewerkzeuge werden durch eine verschließbare Öffnung der Kammer mit Werkstücken beschickt und entladen.

Die zum Schweißen von Nähten erforderlichen relativen Bewegungen zwischen einer Schweißeinrichtung und den Werkstücken werden z.B. durch magnetische Ablenkung des Elektronenstrahls, durch Verfahren des Elektronenstrahlgenerators, durch Bewegung des Werkstücks mittels Manipulatoren mit einer oder mehreren Achsen oder durch eine Kombination dieser Methoden erzeugt.

Insbesondere beim Schweißen von kleinen Werkstücken in kleinen Kammern ist der Wechsel der Werkstücke durch kleine Kammeröffnungen oft schwierig und zeitintensiv. Für die Serienfertigung von solchen kleinen Werkstücken wurden daher Maschinen entwickelt, bei denen die Haltewerkzeuge samt Manipulatoren für das Bewegen des Werkstücks auf einem abnehmbaren Kammerboden montiert sind, der zugleich als Kammerverschluss ausgebildet ist und für den Werkstückwechsel abgesenkt werden kann. Die Kammerböden können auch für die Aufnahme mehrerer Werkstücke konstruiert sein.

Um die Taktzeiten an den teuren Elektronenstrahlschweißanlagen zu minimieren, ist es bekannt, wechselweise zwei austauschbare Kammerböden einzusetzen. Dabei kann der Werkstückwechsel bei einem Kammerboden außerhalb der Kammer erfolgen, während das Schweißen von Werkstücken mit dem zweiten Kammerboden innerhalb der Kammer erfolgt. Nachfolgend werden die Böden mit den darauf gehaltenen Werkstücken ausgetauscht.

Bei solchen Kammeranordnungen werden die Antriebsvorrichtungen für das Bewegen der Manipulatorachsen der in der Kammer befindlichen Manipulatoren z.B. an den Kammerböden montiert und über flexible Anschlussleitungen versorgt.

Die US 6 710 360 B2 offenbart einen Ionenimplanter, der eine Ionenstrahlquelle zum Erzeugen eines Ionenstrahls und eine Vakuum- oder Implantationskammer, in die ein Werkstück für eine Ionenimplantation einer Oberfläche des Werkstücks positioniert wird, aufweist. Der Ionenimplanter weist weiter eine Werkstückhaltestruktur auf, die mit der Implantationskammer verbunden ist und das Werkstück hält. Die Werkstückhaltestruktur weist ein Drehbauteil, das drehbar an der Implantationskammer angebracht ist, und ein Translationsbauteil, das bewegbar mit dem Drehbauteil verbunden ist, auf.

Die US 7 030 395 B2 offenbart einen Ionenimplanter, der eine Ionenstrahlquelle zum Erzeugen eines Ionenstrahls und eine Vakuum- oder Implantationskammer, in die ein Werkstück für eine Ionenimplantation einer Oberfläche des Werkstücks positioniert wird, aufweist. Der Ionenimplanter weist eine Werkstückhaltestruktur mit einem Scannarm, der sich durch eine Öffnung in einer Wand der Implantationskammer in den Innenbereich der Implantationskammer erstreckt, auf.

Die DE 44 25 090 C1 offenbart eine schwenkbare Elektronenkanone, die der Durchführung von Härte- und Schweißprozessen beliebig geometrisch ausgebildeter Werkstücke dient. Zwischen der Elektronenkanone und dem Rezipienten ist ein zweiteiliges Gehäuse angeordnet, dessen Trennstelle schräg verläuft. Im Bereich der Trennstelle ist ein Antriebselement angeordnet, welches aus zwei Scheiben mit dazwischen gelagerter Antriebsscheibe besteht. Bei Drehen der Antriebsscheibe werden durch entsprechend verzahnte Elemente die Scheiben und damit die Teile des Gehäuses gegeneinander bewegt.

Eine Aufgabe der Erfindung ist es, eine Kammeranordnung zur Verwendung bei der Elektronenstrahlbearbeitung anzugeben, bei der kleine Werkstücke effizient bearbeitet werden können.

Diese Aufgabe wird durch eine Kammeranordnung gemäß Patentanspruch 1 gelöst.
Weitere vorteilhafte Ausführungsformen sind in den abhängigen Ansprüchen angegeben.

Durch die Erfindung wird eine Kammeranordnung geschaffen, die ein Kammergehäuse, das einen Kammerraum definiert und wenigstens eine Be-/Entladeöffnung aufweist, einen Ring, der die Be-/Entladeöffnung umgibt und um eine Drehachse relativ zu der Be-/Entladeöffnung drehbar an dem Kammergehäuse gelagert ist, und einen Kammerverschluss, der mit dem Ring zum dichten Verschließen der Be-/Entladeöffnung verbindbar und zusammen mit dem Ring relativ zu der Be-/Entladeöffnung drehbar ist, enthält. Ein Grundgedanke dieser Erfindung ist es, den Kammerverschluss, der z.B. als Kammerboden ausgebildet sein kann, zum Drehen um eine Drehachse anzutreiben und so eine Manipulatorachse bereitzustellen, ohne einen Manipulator gegenständlich innerhalb der Kammer vorzusehen.

Vorteilhafterweise weist die Kammeranordnung einen Drehantrieb, der den Ring und dadurch auch den mit dem Ring verbundenen Kammerverschluss zur Drehung antreibt.

Der Kammerverschluss kann in vielen Fällen, in denen die Kammer evakuiert wird, nur durch den Unterdruck an dem Ring gehalten werden. In Fällen, in denen eine große Kraft gegen den Unterdruck wirkt, z.B. falls der Kammerverschluss als Kammerboden ausgebildet ist und schwere Werkstücke gehalten werden, ist es vorteilhaft, dass der Kammerverschluss durch eine Arretiervorrichtung mit dem Ring verriegelt werden kann.

Vorteilhafterweise weist die Kammeranordnung eine Pumpe und das Kammergehäuse eine Ein-/Auslassöffnung zum Evakuieren der Kammer und zum Einlassen von Fluid in die Kammer auf.

Vorteilhafterweise weist die Kammeranordnung eine Hubvorrichtung zum Anheben des Kammerverschlusses zum Verschließen der Be-/Entladeöffnung des Kammergehäuses mittels Verbindens des Kammerverschlusses mit dem Ring und zum Öffnen desselben durch Absenken des Kammerverschlusses auf.

Vorteilhafterweise ist das Innenelement relativ zu dem Außenelement selektiv bewegbar und arretierbar. Dadurch werden weitere Manipulatorachsen ermöglicht.

Vorteilhafterweise enthält die Kammeranordnung eine Kupplung, die eine mit dem Innenelement drehfest verbundene Welle, eine Ringfläche an dem Außenelement, die der Welle unter Bildung eines keilförmigen Ringspalts gegenüberliegt, einen Ring mit einer zu dem Ringspalt komplementären Keilform, der um die Längsachse der Welle und koaxial zu der Längsachse bewegbar angeordnet ist, und eine Feder, die den Ring in Richtung der Längsachse der Welle in den Ringspalt zum Herstellen eines Kraftschlusses zwischen dem Innenelement und dem Außenelement vorspannt auf, wodurch das selektive Bewegen und Arretieren des Innenelements relativ zu dem Außenelement in vorteilhafter Weise ermöglicht wird.

Vorteilhafterweise ist der keilförmige Ring gegen die Vorspannung der Feder bewegbar, damit die Bewegung des Innenelements relativ zu dem Außenelement selektiv freigegeben werden kann.

Vorteilhafterweise ist das Innenelement dazu angepasst, während der Drehung des Außenelements mit einer externen Vorrichtung wie z.B. der Hubvorrichtung verbunden zu werden, damit das Innenelement von dieser drehfest gehalten oder zu einer von der Drehung des Außenelements unabhängigen Drehung angetrieben werden kann.

Vorteilhafterweise enthält die Kammeranordnung einen an dem Außenelement oder Innenelement angeordneten Zahnkranz und ein an dem an dem anderen Element von Außenelement und Innenelement gehaltenes Zahnrad, das in den Zahnkranz greift und durch eine Relativbewegung des Außen- und Innenelements antreibbar ist und mit einer Antriebsachse (z.B. einer Werkstückhaltevorrichtung) zur Drehung derselben verbunden ist.

Weitere Merkmale und Zweckmäßigkeiten ergeben sich aus der Beschreibung von Ausführungsformen anhand der Figuren, von denen:
Fig. 1 eine Schnittzeichnung einer ersten Ausführungsform einer Kammeranordnung entlang ihrer vertikalen Achse zeigt;
Fig. 2 eine Schnittzeichnung eines Teils einer zweiten Ausführungsform der Kammeranordnung entlang ihrer vertikalen Achse zeigt;
Fig. 3 eine Schnittzeichnung eines Teils einer dritten Ausführungsform der Kammeranordnung entlang ihrer vertikalen Achse zeigt; und
Fig. 4 eine Schnittzeichnung eines Teils einer vierten Ausführungsform der Kammeranordnung entlang ihrer vertikalen Achse zeigt.

Weitere Vorrichtungen für eine Elektronenstrahlbearbeitung wie z.B. ein Elektronenstrahlgenerator, Ablenkspulen, usw., die an dem oder bei dem Kammergehäuse angeordnet werden können, sind in den Figuren nicht dargestellt.

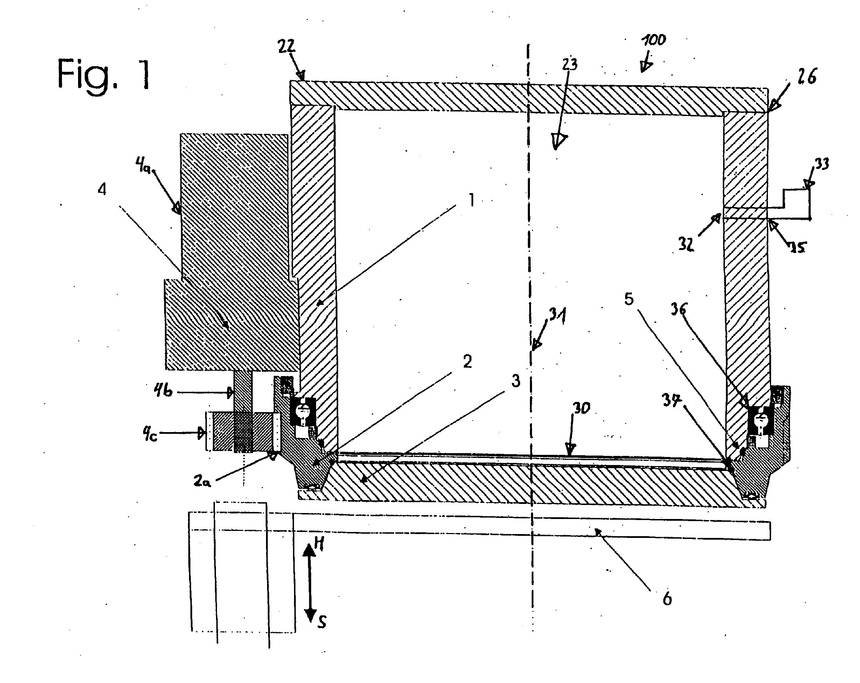

Fig. 1 zeigt eine Ausführungsform einer Kammeranordnung 100 nach einer ersten Ausführungsform, die ein Kammergehäuse 26 aufweist, das eine Kammer 23 definiert, in der eine Elektronenstrahlbearbeitung wie z.B. ein Elektronenstrahlschweißen von Werkstücken unter Vakuum erfolgen kann. Das Kammergehäuse 26 weist bei dieser Ausführungsform eine kreiszylindrische Wand 1, einen Deckel 22 und eine Be-/Entladeöffnung 30 auf. Die Wand 1 definiert mit ihrer Zylinderachse eine vertikale Achse der Kammer 23. Der Deckel 22 bildet die in Richtung der vertikalen Achse obere Begrenzung der Kammer 23. Die Be-/Entladeöffnung 30 ist in Richtung der vertikalen Achse an der Unterseite des Kammergehäuses 26 ausgebildet und hat die Form eines Kreises mit dem Durchmesser der kreiszylindrischen Wand 1.

Die Kammeranordnung 100 weist weiter einen Ring 2 auf. Der kreisförmige Ring 2 weist eine Außenverzahnung 2a auf. Über ein Lager 36 und eine ringförmige Dichtung 5 ist der Ring 2 an der Außenseite der Wand 1 an der die Be-/Entladeöffnung 30 aufweisenden Seite des Kammergehäuses 26 so gelagert und angeordnet, dass der Ring 2 die Be-/Entladeöffnung 30 begrenzend umgibt. Über das als Kugellager ausgebildete Lager 36 ist der Ring 2 um eine Drehachse 31 durch seinen Mittelpunkt relativ zu der Be-/Entladeöffnung 30 drehbar. Die Drehachse 31 entspricht bei dieser Ausführungsform der Zylinderachse der Wand 1. Die Dichtung 5 ist zwischen dem Kammergehäuse 26 und dem Ring 2 angeordnet. Die Dichtung 5 ist z.B. eine von der Firma Freudenberg, Weinheim, Deutschland erhältliche O-Ring-Dichtung, die trocken oder unter Öl laufend sein kann.

Die Kammeranordnung 100 weist weiter einen Kammerverschluss 3 auf. Bei dieser Ausführungsform ist der Kammerverschluss 3 als kreisplattenförmiger Boden ausgebildet. Der Kammerverschluss 3 ist mit dem Ring 2 zum dichten Verschließen der Be-/Entladeöffnung 30 verbindbar. Zwischen dem Ring 2 und dem Kammerverschluss 3 ist im verschlossenen Zustand eine ringförmige Dichtung 37, die in eine Nut des Rings 2 aufgenommen ist, angeordnet. Im verschlossenen Zustand ist der Kammerverschluss 3 nur mit dem Ring 2 verbunden und so zusammen mit Ring 2 relativ zu der Wand 1 drehbar.

Die Kammeranordnung 100 weist weiter einen Drehantrieb 4 auf. Der Drehantrieb 4 weist einen Motor 4a wie z.B. einen Elektromotor, eine Antriebswelle 4b und ein Ritzel 4c auf. Das Ritzel 4c ist drehfest an der Antriebswelle 4b vorgesehen. Der Motor 4a treibt die Antriebswelle 4b an. Der Drehantrieb 4 ist so an der Außenseite der Wand 1 angeordnet, dass das Ritzel 4c in Eingriff mit der Außenverzahnung 2a des Rings 2 ist.

Die Kammeranordnung 100 weist weiter eine Ein-/Auslassöffnung 32 in der Wand 1 und eine Pumpe 33 auf. Die Pumpe 33 ist bei dieser Ausführungsform an der Außenseite der Wand 1 angeordnet und über eine Leitung 35 mit der Ein-/Auslassöffnung 32 in der Wand 1 und so mit der Kammer 23 verbunden.

Die Kammeranordnung 100 weist weiter eine externe Vorrichtung, die bei dieser Ausführungsform als eine Hubvorrichtung 6 ausgebildet ist, auf. Die Hubvorrichtung 6 kann z.B. pneumatisch sein. Die Hubvorrichtung 6 ist zum Bewegen des Kammerverschlusses 3 zu dem Ring 2, bei dieser Ausführungsform durch Anheben des Kammerverschlusses 3 in Richtung H, und zum Entfernen von dem Ring 2, durch Absenken des Kammerverschlusses 3 in Richtung S, vorgesehen. Die Richtungen H und S sind bei dieser Ausführungsform koaxial zu der Drehachse 31.

Die Kammeranordnung 100 kann bautechnische Alternativen aufweisen. Im Folgenden werden einige Varianten beschrieben.

Bei dem Kammergehäuse können die Wand und der Deckel einstückig ausgebildet sein. Die Be-/Entladeöffnung kann an jeder Seite der Kammer vorgesehen sein. Es können mehrere Be/Entladeöffnungen vorgesehen sein, die in beliebigen Positionen am Kammergehäuse angeordnet sein können. Des Weiteren kann das Kammergehäuse jede beliebige Form z.B. eine Kastenform aufweisen. Es ist hinreichend, wenn das Kammergehäuse an der Be-/Entladeöffnung einen kreisrunden Kragen, Ansatz oder Ähnliches aufweist, an dem der Ring zu der Drehbewegung gelagert werden kann. In dem oder an dem Ring kann eine Arretiervorrichtung (nicht dargestellt) vorgesehen sein, die z.B. als Bajonettverschluss zwischen Kammerverschluss und Ring oder als Steckverbindung, bei der ein Zylinder durch den Ring in den Kammerverschluss eingeführt wird, ausgebildet sein kann.

Die Betriebsweise der Kammeranordnung 100 wird im Folgenden anhand der ersten Ausführungsform aus Fig. 1 beschrieben.

Die Hubvorrichtung 6 bewegt den Kammerverschluss 3 durch Anheben in Richtung H zu dem Ring 2. Der Kammerverschluss 3 verschließt durch diesen Vorgang die Be-/Entladeöffnung 30. Anschließend wird durch Betrieb der Pumpe 33 über die Ein-/Auslassöffnung 32 und die Leitung 35 in der Kammer 23 ein Unterdruck erzeugt. Der Kammerverschluss 3 wird dadurch in dem oder an dem Ring 2 gehalten. Zum sicheren Festhalten des Kammerverschlusses 3 kann zusätzlich die optionale Arretiervorrichtung verhindern, dass sich der Kammerverschluss 3 aufgrund von Belastung, verursacht durch z.B. schwere Werkstücke, von dem Ring 2 trotz Unterdruck in der Kammer 23 löst. Zur Aufrechterhaltung des Unterdrucks in der Kammer 23 sind zwischen der Wand 1 und dem Ring 2 die Dichtung 5 und zwischen dem Kammerverschluss 3 und dem Ring 2 die Dichtung 37 vorgesehen. Sobald in der Kammer 23 der Unterdruck erzeugt und der Kammerverschluss 3 in dem oder an dem Ring 2 gehalten wird, wird die Hubvorrichtung 6 in Richtung S von dem Kammerverschluss 3 entfernt. Diesen Zustand zeigt Fig. 1.

Der Motor 4a des Drehantriebs 4 kann in diesem Zustand über die Antriebswelle 4b und das in die Außenverzahnung 2a eingreifende Ritzel 4c den Ring 2 zur Drehung antreiben. Dabei dreht sich der Ring 2 auf dem Lager 36 an der Außenseite der Wand 1 entlang. Durch das Verbinden des Kammerverschlusses 3 mit dem Ring 2 dreht sich der Kammerverschluss 3 bei Drehung des Rings 2 mit dem Ring 2.

Zum Öffnen der Kammer 23 wird die Hubvorrichtung 6 in Richtung H bewegt und Fluid wie z.B. Luft wird in die Kammer 23 über die Pumpe 33, die Leitung 35 und die Ein-/Auslassöffnung 32 und/oder über ein nicht gezeigtes Ventil eingelassen, so dass die Be-/Entladeöffnung 30 durch Absenken des Kammerverschlusses 3 in Richtung S geöffnet werden kann.

Mit der ersten Ausführungsform wird eine Kammeranordnung angegeben, bei der eine Bewegungsachse für Werkstücke im Inneren ohne das Vorsehen einer Antriebsachse im Inneren der Kammer und ohne eine Antriebswelle, die die Kammerwand durchdringt, bereitgestellt wird.

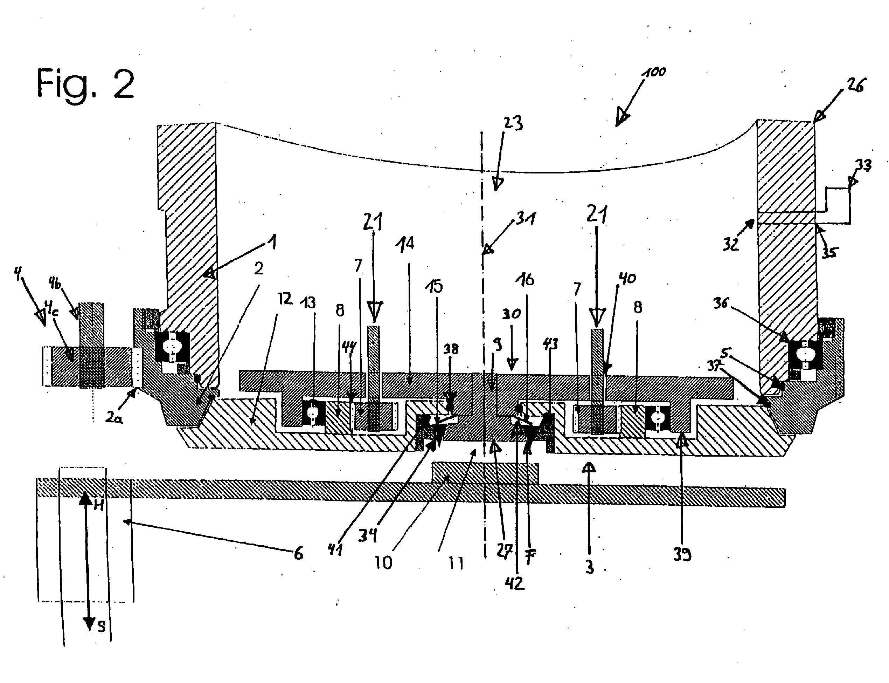

Fig. 2 zeigt eine zweite Ausführungsform der Kammeranordnung 100. Die zweite Ausführungsform entspricht der ersten Ausführungsform, ausgenommen die Ausbildung des Kammerverschlusses 3 und die im Folgenden beschriebenen Merkmale. Der Kammerverschluss 3 ist ebenfalls als Boden ausgebildet. Der Kammerverschluss 3 weist in dieser Ausführungsform ein Außenelement 12, ein Innenelement 14 und eine Kupplung 27 auf.

Das Außenelement 12 ist in der selben Weise wie der Kammerverschluss 3 der ersten Ausführungsform mit dem Ring 2 zur Drehung um die Drehachse 31 verbindbar. Das Außenelement 12 ist als kreisförmige Platte mit einer zentralen Vertiefung 41 an der Außenseite mit einem zentralen Durchgangsloch 42 ausgebildet. In der Vertiefung 41 ist ein Verriegelungselement 43 drehfest angeordnet, das eine konische Ringfläche 34 um die Drehachse 31 an seiner Innenseite auf weist. Die Drehachse 31 entspricht der Konusachse der konusförmigen Ringfläche 34.

Das Innenelement 14 ist in einem Zustand, in dem die Be-/Entladeöffnung 30 durch den Kammerverschluss 3 verschlossen ist, auf der der Kammer 23 zugewandten Innenseite des Außenelements 12 angeordnet. Das Innenelement 14 weist an der dem Außenelement 12 zugewandten Seite einen Vorsprung 39 auf. Das Innenelement 14 weist weiter Durchgangslöcher 40 auf, die in koaxialer Richtung zu der Drehachse 31 verlaufen.

Die Kupplung 27 weist bei dieser Ausführungsform eine Welle 9, die Ringfläche 34 an dem Au-βenelement 12, einen Ring 15 und eine Feder 16 auf. Die Welle 9 ist mit dem Innenelement 14 drehfest und dicht verbunden. Der Welle 9 liegt die Ringfläche 34 unter Bildung eines keilförmigen Ringspalts F gegenüber. Die Welle 9 weist an ihrem der Kammer 23 abgewandten Ende eine Nut 11 auf. Der Ring 15 hat eine zu dem Ringspalt F komplementäre Keilform. Der Ring 15 ist um die Längsachse der Welle 9, die der Drehachse 31 entspricht, angeordnet. Der Ring 15 ist koaxial zu der Längsachse bewegbar. Die Feder 16 ist an dem Innenelement 14 an der dem Au-βenelement 12 zugewandten Seite so angeordnet, dass sie den Ring 15 in den Spalt F vorspannt.

Die Kammeranordnung 100 weist weiter bei dieser Ausführungsform einen Zahnkranz 8 auf. Der Zahnkranz 8 ist an dem Außenelement 12 an der dem Innenelement 14 zugewandten Seite konzentrisch zu dem Durchgangsloch 42 ausgebildet. Die Verzahnung 44 des Zahnkranzes 8 ist bei dieser Ausführungsform eine Innenverzahnung (radial nach innen in Richtung der Längsachse der Welle 9).

Die Kammeranordnung 100 weist weiter Zahnräder 7 auf. Die Zahnräder 7 sind an Antriebsachsen 21 von Werkstückhaltevorrichtungen (nicht dargestellt) vorgesehen. Die Zahnräder 7 sind Ritzel und über die Verzahnung 44 in Eingriff mit dem Zahnkranz 8. Die Antriebsachsen 21 erstrecken sich durch die Durchgangslöcher 40 in die Kammer 23.

Die Kammeranordnung 100 weist weiter eine ringförmige Dichtung 38 auf. Die Dichtung 38 ist zwischen dem Innenelement 14 und dem Außenelement 12 in dem Durchgangsloch 42 konzentrisch um die Längsachse der Welle 9 angeordnet. Die Dichtung 38 ist z.B. eine von der Firma Freudenberg, Weinheim, Deutschland erhältliche O-Ring-Dichtung.

Die Kammerverschluss 3 weist weiter ein Lager 13, z.B. ein Kugellager, auf. Das Lager 13 ist zwischen dem Außenelement 12 und dem Innenelement 14 in radialer Richtung an der Außenseite des Zahnkranzes 8 vorgesehen.

Die Hubvorrichtung 6 weist weiter einen Keil 10 auf. Der Keil 10 ist auf der Hubvorrichtung 6 angeordnet und hat eine zu der Nut 11 komplementäre Form.

Das Öffnen und Schließen der Be-/Entladeöffnung 30 durch den Kammerverschluss 3 mittels der Hubvorrichtung 6 sowie das Erzeugen von Unterdruck und das Einlassen von Fluid in die Kammer 23 erfolgt bei dieser Ausführungsform wie bei der ersten Ausführungsform.

Einen Zustand, in dem die Be-/Entladeöffnung 30 durch den Kammerverschluss 3 verschlossen, in der Kammer 23 Unterdruck erzeugt und die Hubvorrichtung 6 von dem Kammerverschluss 3 entfernt ist, zeigt Fig. 2. In diesem Zustand drehen sich das Innenelement 14 und das Außenelement 12 zusammen, wenn der Ring 2 über die Antriebswelle 4b und das Ritzel 4c von dem Motor der Drehvorrichtung angetrieben wird. Die Drehung des Innenelements 14 mit dem Außenelement 12 wird von einem Kraftschluss zwischen dem Innenelement 14 und dem Außenelement 12 verursacht. Der Kraftschluss wird durch die Kupplung 27, in der die Feder 16 den Ring 15 in Richtung der Längsachse der Welle 9 in den Ringspalt F vorspannt, bewirkt.

Zum selektiven Freigeben der Bewegung des Innenelements 14 relativ zu dem Außenelement 12 kann der Ring 15 gegen die Vorspannung der Feder 16 bewegt werden. Die Freigabe der Bewegung erfolgt bei dieser Ausführungsform durch Anheben der Hubvorrichtung 6 in Richtung H. Dabei greift der auf der Hubvorrichtung 6 angeordnete Keil 10 in die Nut 11. Dadurch wird der Ring 15 gegen die Vorspannung der Feder 16 bewegt. Das Innenelement 14 wird in diesem Zustand durch den Eingriff des Keils 10 in die Nut 11 drehfest gehalten. Wird der Ring 2 in diesem Zustand über die Antriebswelle 4b und das Ritzel 4c von dem Motor der Drehvorrichtung angetrieben, so dreht sich das Außenelement 12 ohne eine Drehbewegung des Innenelements 14. Durch die Relativbewegung des Außenelements 12 und des Innenelements 14 zueinander werden die Zahnräder 7 über den Zahnkranz 8 und damit auch die Antriebsachsen 21 zur Drehung angetrieben.

Alternativ kann das Innenelement 14 durch eine Vorrichtung (nicht dargestellt) zu einer von der Drehung des Außenelements 12 unabhängigen Drehung angetrieben zu werden.

Wird die Hubvorrichtung 6 in Richtung S abgesenkt, so wird der Kraftschluss zwischen dem Innenelement 14 und dem Außenelement 12 wieder hergestellt, da der Keil 10 aus der Nut 11 entfernt wird und der Ring 15 durch die Feder 16 in den Ringspalt F vorgespannt wird.

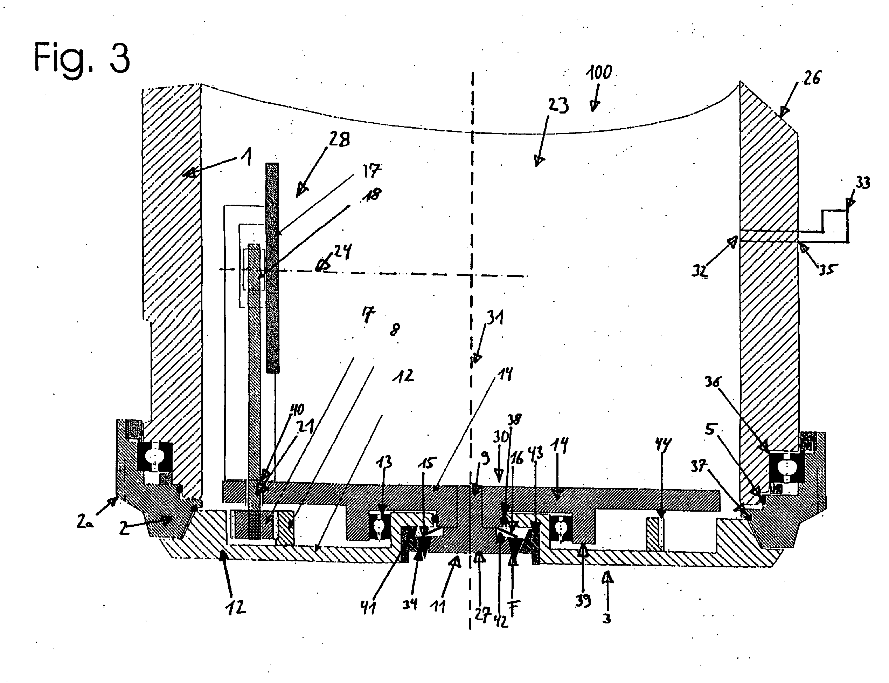

Fig. 3 zeigt eine dritte Ausführungsform der Kammeranordnung 100. Die dritte Ausführungsform entspricht der zweiten Ausführungsform, ausgenommen die im Folgenden beschriebenen Merkmale. Die Verzahnung 44 des Zahnkranzes 8, in die ein Zahnrad 7 eingreift, ist radial nach außen ausgebildet.

Die Kammeranordnung 100 weist bei dieser Ausführungsform in der Kammer 23 einen Manipulator 28 auf. Der Manipulator 28 weist bei dieser Ausführungsform eine Schneckenwelle 18 und eine plane Scheibe 17 auf. Die Schneckenwelle 18 ist auf der Antriebsachse 21 des Zahnrads 7 angeordnet. Die Scheibe 17 ist an der Schneckenwelle 18 so angeordnet, dass sie um eine Rotationsachse 24 drehbar ist. Die Rotationsachse 24 ist senkrecht zu der Antriebsachse 21.

In einem Zustand, in dem sich das Außenelement 12 relativ zu dem Innenelement 14 bewegt, wird das Zahnrad 7 über den Zahnkranz 8 und damit auch die Antriebsachse 21 zur Drehung angetrieben. Die Antriebsachse 21 treibt dann über die Schneckenwelle 18 die Scheibe 17 zur Drehung um die Rotationsachse 24 an.

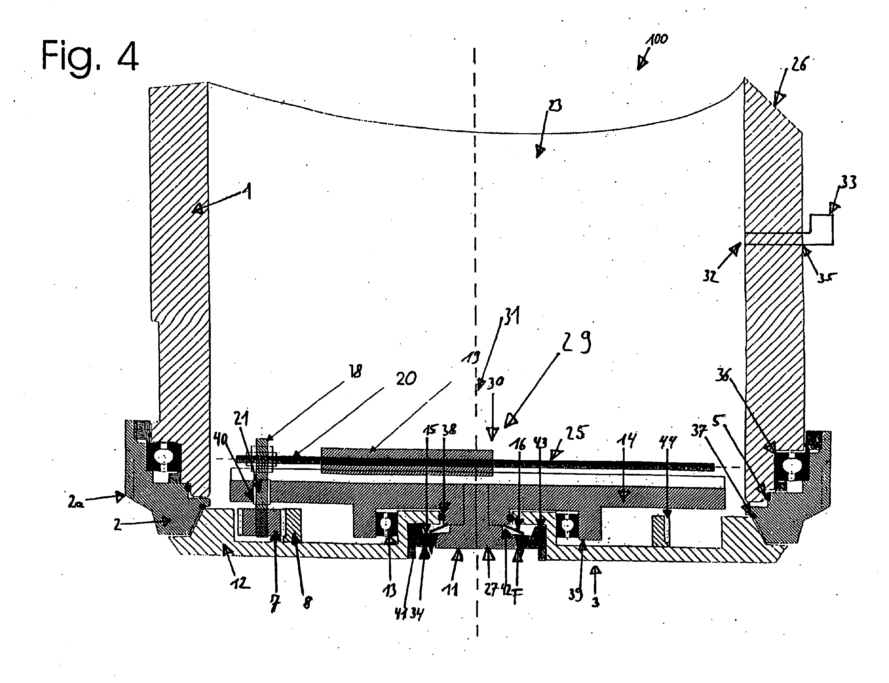

Fig. 4 zeigt eine vierte Ausführungsform der Kammeranordnung 100. Die vierte Ausführungsform entspricht der zweiten Ausführungsform, ausgenommen die im Folgenden beschriebenen Merkmale. Die Verzahnung 44 des Zahnkranzes 8, in die ein Zahnrad 7 eingreift, ist radial nach außen ausgebildet.

Die Kammeranordnung 100 weist bei dieser Ausführungsform in der Kammer 23 einen Manipulator 29 auf. Der Manipulator 29 weist bei dieser Ausführungsform eine Schneckenwelle 18, eine Spindel 20 und einen linear verschiebbaren Tisch 19 auf. Die Schneckenwelle 18 ist auf der Antriebsachse 21 des Zahnrads 7angeordnet. Die Spindel 20 ist drehbar an der Schneckenwelle 18 senkrecht zu der Antriebsachse 21 angeordnet. Der Tisch 19 ist auf der Spindel 20 entlang einer Translationsachse 25 bewegbar.

In einem Zustand, in dem sich das Außenelement 12 relativ zu dem Innenelement 14 bewegt, wird das Zahnrad 7 über den Zahnkranz 8 und damit auch die Antriebsachse 21 zur Drehung angetrieben. Die Antriebsachse 21 treibt dann über die Schneckenwelle 18 und die Spindel 20 den Tisch 19 entlang der Translationsachse 25 an.

Die Kammeranordnung 100 mit den Merkmalen wie Fig. 3 oder Fig. 4 kann in einer weiteren Ausführungsform eine Stellvorrichtung (nicht dargestellt) in der Kammer 23 vorsehen, die ein Übertragen der Relativbewegung des Außenelements 12 und des Innenelements 14 auf unterschiedliche, wechselweise betätigte Achsen 24, 25 ermöglicht. Darüber hinaus können an entsprechenden Stellen der Welle 9 mehrere Nuten 11 entsprechend einer Mehrzahl von Arbeitspositionen des Manipulators 28, 29 vorgesehen sein, in die der Keil 10 beim Anheben der Hubvorrichtung 6 in Richtung H eingreift.

Weitere Ausführungsformen der Kammeranordnung z.B. als Doppelkammer, bei der drei Kammerverschlüsse im Abstand von 120 ° angeordnet sind und die wechselweise den zwei Kammern zugeführt werden, um die Zeit für einen Bearbeitungsvorgang zu minimieren, sind nicht dargestellt.

Alle Merkmale der beschriebenen Ausführungsformen können frei kombiniert werden.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

1 Wand
2 Ring
2a Außenverzahnung
3 Kammerverschluss
4 Antriebsvorrichtung
4a Motor
4b Antriebswelle
4c Ritzel
5 Dichtung
6 Hubvorrichtung
7 Zahnrad
8 Zahnkranz
9 Welle
10 Keil
11 Nut
12 Außenelement
13 Lager
14 Innenelement
15 Ring
16 Feder
17 Scheibe
18 Schneckenwelle
19 Tisch
20 Spindel
21 Antriebsachse
22 Deckel
23 Kammer
24 Rotationsachse
25 Translationsachse
26 Kammergehäuse
27 Kupplung
28 Manipulator
29 Manipulator
30 Be-/Entladeöffnung
31 Drehachse
32 Ein-/Auslassöffnung
33 Pumpe
34 Ringfläche
35 Leitung
36 Lager
37 Dichtung
38 Dichtung
39 Vorsprung
40 Durchgangsloch
41 Vertiefung
42 Durchgangsloch
43 Verriegelungselement
44 Verzahnung
100 Kammeranordnung
H Anheberichtung der Hubvorrichtung 6
S Absenkrichtung der Hubvorrichtung 6
F Spalt zwischen Außenelement 12 und Innenelement 14

## Patentansprüche

1. Kammeranordnung (100) zum Elektronenstrahlschweißen, mit
einem Kammergehäuse (26), das eine Kammer (23) definiert und wenigstens eine Be-/Entladeöffnung (30) aufweist, **dadurch gekennzeichnet, dass**
ein Ring (2) die Be-/Entladeöffnung (30) umgebend und um eine Drehachse (31) relativ zu der Be-/Entladeöffnung (30) drehbar an dem Kammergehäuse (26) gelagert ist, und
ein Kammerverschluss (3) mit dem Ring (2) zum dichten Verschließen der Be-/Entladeöffnung (30) verbindbar und zusammen mit dem Ring (2) relativ zu der Be-/Entladeöfmung (30) im geschlossenen Zustand der Kammeranordnung (100) drehbar ist.

2. Kammeranordnung nach Anspruch 1, die weiter einen Drehantrieb (4) für den Ring (2) aufweist.

3. Kammeranordnung nach Anspruch 1 oder 2, die weiter eine Dichtung (5), die zwischen dem Kammergehäuse (26) und dem Ring (2) vorgesehen ist, aufweist.

4. Kammeranordnung nach einem der Ansprüche 1 bis 3, die eine Arretiervorrichtung zum Verriegeln des Rings (2) und des Kammerverschlusses (3) aufweist.

5. Kammeranordnung nach einem der Ansprüche 1 bis 4, bei der der Kammerverschluss (3) plattenförmig ausgebildet ist.

6. Kammeranordnung nach einem der Ansprüche 1 bis 5, bei der
das Kammergehäuse (26) eine Ein-/Auslassöffnung (32) zum Evakuieren der und zum Einlassen von Fluid in die Kammer (23) aufweist, und
eine Pumpe (33) zum Evakuieren der Kammer (23) vorgesehen ist.

7. Kammeranordnung nach einem der Ansprüche 1 bis 6, die weiter eine Hubvorrichtung (6), die zum Anheben und Absenken des Kammerverschlusses (3) ausgebildet ist, aufweist.

8. Kammeranordnung nach einem der Ansprüche 1 bis 7, bei der
der Kammerverschluss (3)
ein Außenelement (12), das mit dem Ring (2) zur Drehung um die Drehachse (31) verbindbar ist, und
ein Innenelement (14), das in dem Zustand, in dem die Be-/Entladeöfinung (30) durch den Kammerverschluss (3) verschlossen ist, auf der der Kammer (23) zugewandten Seite des Außenelements (12) angeordnet ist, aufweist.

9. Kammeranordnung nach Anspruch 8, bei der
das Innenelement (14) relativ zu dem Außenelement (12) selektiv bewegbar und arretierbar ist.

10. Kammeranordnung nach Anspruch 8 oder 9, die weiter
eine Kupplung (27) aufweist, die
eine Welle (9), die drehfest mit dem Innenelement (14) verbunden ist,
eine Ringfläche (34) an dem Außenelement (12), die der Welle (9) unter Bildung eines keilförmigen Ringspalts (F) gegenüberliegt,
einen Ring (15) mit einer zu dem Ringspalt (F) komplementären Keilform, der um die Längsachse der Welle (9) und koaxial zu der Längsachse bewegbar angeordnet ist, und
eine Feder (16), die den Ring (15) in Richtung der Längsachse der Welle (9) in den Ringspalt (F) zum Herstellen eines Kraftschlusses zwischen dem Innenelement (14) und dem Außenelement (12) vorspannt,
aufweist.

11. Kammeranordnung nach Anspruch 10, bei der der keilförmige Ring (15) zum selektiven Freigeben der Bewegung des Innenelementes (14) relativ zu dem Außenelement (12) gegen die Vorspannung der Feder (16) bewegbar ist.

12. Kammeranordnung nach einem der Ansprüche 9 bis 11, bei der das Innenelement (14) dazu angepasst ist, während der Drehung des Außenelements (12) mit einer externen Vorrichtung (6), die dazu angepasst ist, das Innenelement (14) drehfest zu halten oder zu einer von der Drehung des Außenelements (12) unabhängigen Drehung anzutreiben, verbunden zu werden.

13. Kammeranordnung nach Anspruch 12, bei der die externe Vorrichtung die Hubvorrichtung (6) ist.

14. Kammeranordnung (26) nach einem der Ansprüche 8 bis 13, weiter:
einen auf dem Außenelement (12) angeordneten, zu dem Innenelement (14) gerichteten Zahnkranz (8),
Zahnräder (7), die in den Zahnkranz (8) greifen und durch die Relativbewegung des Außen- und Innenelements (12, 14) angetrieben werden,
Achsen (21) von Werkstückhaltevorrichtungen, die sich von den Zahnrädern (7) durch das Innenelement (14) in die Kammer (23) erstrecken und durch Drehung der Zahnräder (7) drehbar antreibbar sind, aufweist.

15. Kammeranordnung (26) nach einem der Ansprüche 8 bis 14, die weiter einen Manipulator (28, 29) zum Positionieren der Werkstücke in der Kammer (23) und eine auf den Achsen (21) angeordnete Schneckenwelle (18), wobei der Manipulator durch die Relativbewegung des Außen- und Innenelements (12, 14) antreibbar ist, und die Schneckenwelle (18) eine Rotationsachse (24) und/oder eine Translationsachse (25) des Manipulators antreibt, aufweist.

16. Kammeranordnung (26) nach einem der Ansprüche 8 bis 15, die eine weitere Stellvorrichtung in der Kammer (23), die ein Übertragen der Relativbewegung des Außen- und Innenelements (12, 14) auf unterschiedliche, wechselweise betätigte Achsen (24, 25) ermöglicht, aufweist.

17. Kammeranordnung (26) nach einem der Ansprüche 8 bis 16, bei der entsprechend einer Anzahl von Arbeitspositionen des Manipulators (28, 29) an den entsprechenden Stellen der Welle (9) mehrere, sich kreuzende Nuten (11) vorgesehen sind, in die ein auf der Hubvorrichtung (6) angeordneter Keil (10) beim Anheben der Hubvorrichtung (6) eingreift.

## Claims

1. A chamber arrangement (100) for electron beam processing, comprising
a chamber housing (26) defining a chamber (23) and having at least one loading/unloading opening (30), **characterized in that**
a ring (2) is supported on the chamber housing (26) in a manner surrounding the loading/unloading opening (30) and being rotatable about a rotation axis (31) relative to the loading/unloading opening (30), and
a chamber closure (3) is connectable to the ring (2) for sealed closure of the loading/unloading opening (30) and is rotatable together with the ring (2) relative to the loading/unloading opening (30) in the closed state of the chamber arrangement.

2. The chamber arrangement according to claim 1, further comprising a rotary drive (4) for the ring (2).

3. The chamber arrangement according to claim 1 or 2, further comprising a sealing (5), which is provided between the chamber housing (26) and the ring (2).

4. The chamber arrangement according to one of claims 1 to 3, further comprising locking means for locking the ring (2) and the chamber closure (3).

5. The chamber arrangement according to one of claims 1 to 4, in which the chamber closure (3) is in the form of a plate.

6. The chamber arrangement according to one of claims 1 to 5, wherein
the chamber housing (26) has an inlet/outlet opening (32) for evacuation of fluid from the chamber (23) and for inflow of fluid into the chamber (23), and
a pump (33) is provided for evacuation of the chamber (23).

7. The chamber arrangement according to one of claims 1 to 6, further comprising a lifting means (6) for raising and lowering the chamber closure (3).

8. The chamber arrangement according to one of claims 1 to 7, wherein
the chamber closure (3) comprises
an outer element (12) which is connectable to the ring (2) for rotation about the rotation axis (31), and
an inner element (14) which is arranged on the side of the outer element (12) facing the chamber (23) in a state in which the loading/unloading opening (30) is closed by the chamber closure (3).

9. The chamber arrangement according to claim 8, wherein
the inner element (14) is selectively moveable and lockable relative to the outer element (12).

10. The chamber arrangement according to claim 8 or 9, further comprising
a coupling (27) comprising
a shaft (9) which is connected non-rotatably to the inner element (14),
an annular surface (34) on the outer element (12), which is opposite to the shaft (9) forming a wedge-shaped annular gap (F),
a ring (15) with a wedge shape which is complementary to the annular gap (F) and is arranged in a manner so as to be moveable around the longitudinal axis of the shaft (9) and coaxial with the longitudinal axis, and
a spring (16), which biases the ring (15) in the direction of the longitudinal axis of the shaft (9) into the annular gap (F) in order to generate a force fit between the inner element (14) and the outer element (12).

11. The chamber arrangement according to claim 10, wherein the wedge-shaped ring (15) is moveable against the biasing of the spring (16) in order to selectively allow the movement of the inner element (14) relative to the outer element (12).

12. The chamber arrangement according to one of claims 9 to 11, wherein the inner element (14) is adapted to be connected during the rotation of the outer element (12) to an external apparatus (6), which is adapted to hold the inner element (14) such that they rotate together or to drive it to rotate independently of the rotation of the outer element (12).

13. The chamber arrangement according to claim 12, wherein the external apparatus is the lifting means (6).

14. The chamber arrangement according to one of claims 8 to 13, further comprising
a toothed ring (8) arranged on the outer element (12) and facing the inner element (14),
gearwheels (7) engaging the toothed ring (8) and driveable by the relative movement of the outer and inner elements (12, 14), and
shafts (21) of workpiece holders, extending from the gearwheels (7) through the inner element (14) into the chamber (23) and being rotatable by means of rotation of the gearwheels (7).

15. The chamber arrangement according to one of claims 8 to 14, further comprising a manipulator (28, 29) for positioning the workpieces in the chamber (23), and a worm shaft (18) connected to the shafts (21), wherein the manipulator is driveable by means of the relative movement of the outer an inner elements (12, 14), and the worm shaft (18) drives a rotation shaft (24) and/or a translation shaft (25) of the manipulator.

16. The chamber arrangement according to one of claims 8 to 15 further comprising a further actuating means in the chamber (23) enabling transmitting of the relative movement of the outer and inner elements (12, 14) to different, selectively actuated shafts (24, 25).

17. The chamber arrangement according to one of claims 8 to 16, wherein, corresponding to a plurality of working positions of the manipulator (28, 29), a plurality of intersecting grooves (11) are provided at corresponding points of the shaft (9) which are engageable with a spline (10) arranged on the lifting means (6) when the lifting means (6) is raised.

## Revendications

1. Agencement d'une chambre (100) pour le soudage par faisceau d'électrons, avec un boîtier de chambre (26), qui définit une chambre (23) et présente au moins une ouverture de chargement/déchargement (30), **caractérisé en ce que**
une bague (2) est montée sur le boîtier de chambre (26) en entourant l'ouverture de chargement/déchargement (30) et pouvant tourner autour d'un axe de rotation (31) par rapport à l'ouverture de chargement/déchargement (30), et **en ce qu'**un obturateur de chambre (3) peut être relié à la bague (2) pour la fermeture étanche de l'ouverture de chargement/déchargement (30) et peut tourner conjointement avec la bague (2) par rapport à l'ouverture de chargement/déchargement (30) lorsque l'agencement de chambre (100) est à l'état fermé.

2. Agencement d'une chambre selon la revendication 1, qui présente en outre un entraînement rotatif (4) pour la bague (2).

3. Agencement d'une chambre selon la revendication 1 ou 2, qui présente en outre un joint (5), qui est prévu entre le boîtier de chambre (26) et la bague (2).

4. Agencement d'une chambre selon l'une quelconque des revendications 1 à 3, qui présente un dispositif d'arrêt servant à verrouiller la bague (2) et l'obturateur de chambre (3).

5. Agencement d'une chambre selon l'une quelconque des revendications 1 à 4, dans lequel l'obturateur de chambre (3) est réalisé sous forme de plaque.

6. Agencement d'une chambre selon l'une quelconque des revendications 1 à 5, dans lequel
le boîtier de chambre (26) présente une ouverture d'entrée/sortie (32) servant à vider la chambre (23) et à laisser entrer un fluide dans la chambre (23), et
une pompe (33) servant à vider la chambre (23) est prévue.

7. Agencement d'une chambre selon l'une quelconque des revendications 1 à 6, qui présente en outre un dispositif de levage (6), conçu pour soulever et descendre l'obturateur de chambre (3).

8. Agencement d'une chambre selon l'une quelconque des revendications 1 à 7,dans lequel
l'obturateur de chambre (3) présente
un élément extérieur (12), qui peut être relié à la bague (2) pour tourner autour de l'axe de rotation (31) et
un élément intérieur (14), qui est agencé sur le coté de l'élément extérieur (12) tourné vers la chambre (23) à l'état, dans lequel l'ouverture de chargement/déchargement (30) est fermée par l'obturateur de chambre (3).

9. Agencement d'une chambre selon la revendication 8, dans lequel
l'élément intérieur (14) peut être déplacé et arrêté de manière sélective par rapport à l'élément extérieur (12).

10. Agencement d'une chambre selon la revendication 8 ou 9, qui présente en outre
un dispositif d'accouplement (27), qui présente
un arbre (9), qui est relié à l'élément intérieur (14) de manière solidaire en rotation,
une surface annulaire (34) au niveau de l'élément extérieur (12), qui fait face à l'arbre (9) en formant une fente annulaire cunéiforme (F),
une bague (15) avec une forme cunéiforme complémentaire à la fente annulaire (F), qui est agencée de manière mobile autour de l'axe longitudinal de l'arbre (9) et de manière coaxiale par rapport à l'axe longitudinal, et
un ressort (16), qui précontraint la bague (15) en direction de l'axe longitudinal de l'arbre (9) dans la fente annulaire (F) pour établir une liaison par force entre l'élément intérieur (14) et l'élément extérieur (12).

11. Agencement d'une chambre selon la revendication 10, dans lequel la bague cunéiforme (15) peut être déplacée contre la précontrainte du ressort (16) pour la libération sélective du mouvement de l'élément intérieur (14) par rapport à l'élément extérieur (12).

12. Agencement d'une chambre selon l'une quelconque des revendications 9 à 11, dans lequel l'élément intérieur (14) est adapté pour être relié à un dispositif externe (6) pendant la rotation de l'élément extérieur (12), lequel dispositif est adapté pour maintenir l'élément intérieur (14) de manière solidaire en rotation ou le mettre en rotation indépendamment de la rotation de l'élément extérieur (12).

13. Agencement d'une chambre selon la revendication 12, dans lequel le dispositif externe est le dispositif de levage (6).

14. Agencement d'une chambre (26) selon l'une quelconque des revendications 8 à 13, qui présente en outre :
une couronne dentée (8) agencée sur l'élément extérieur (12) et dirigée vers l'élément intérieur (14),
des roues dentées (7), qui prennent dans la couronne dentée (8) et sont entraînées par le mouvement relatif de l'élément extérieur et intérieur (12, 14),
des axes (21) de dispositifs porte-pièce, qui s'étendent des roues dentées (7) à travers l'élément intérieur (14) jusque dans la chambre (23) et peuvent être mis en rotation par rotation des roues dentées (7).

15. Agencement d'une chambre (26) selon l'une quelconque des revendications 8 à 14, qui présente en outre un manipulateur (28, 29) servant à positionner les pièces dans la chambre (23) et un arbre sans fin (18) agencé sur les axes (21), le manipulateur pouvant être entraîné par le mouvement relatif de l'élément extérieur et intérieur (12, 14) et l'arbre sans fin (18) entraînant un axe de rotation (24) et/ou un axe de translation (25) du manipulateur.

16. Agencement d'une chambre (26) selon l'une quelconque des revendications 8 à 15, qui présente un autre dispositif de réglage dans la chambre (23), qui permet de transmettre le mouvement relatif de l'élément extérieur et intérieur (12, 14) à différents axes (24, 25) à actionnement alternatif.

17. Agencement d'une chambre (26) selon l'une quelconque des revendications 8 à 16, dans lequel en fonction du nombre de positions de travail du manipulateur (28, 29), plusieurs rainures (11) se croisant, dans lesquelles prend une clavette (10) agencée sur le dispositif de levage (6) lors du levage du dispositif de levage (6), sont prévues à des endroits correspondants de l'arbre (9).
